# EUROPÄISCHE PATENTSCHRIFT

(11) **EP 3 784 921 B1**
(45) Veröffentlichungstag und Bekanntmachung des Hinweises auf die Patenterteilung: **05.06.2024**
(21) Anmeldenummer: 19718258.7
(22) Anmeldetag: 01.04.2019
(51) Int. Cl.: F16D 66/02, B60T 17/22

(54) **VERFAHREN ZUR ANZEIGE EINES ANSTEHENDEN BREMSBELAGSWECHSELS EINER FAHRZEUGBREMSE**
METHOD FOR INDICATING A PENDING BRAKE PAD CHANGE OF A MOTOR VEHICLE BRAKE
PROCÉDÉ SERVANT À AFFICHER UN CHANGEMENT DE GARNITURE DE FREIN IMMINENT D'UN FREIN DE VÉHICULE

(30) Priorität: 25.04.2018 DE 102018109963
(43) Veröffentlichungstag der Anmeldung: 03.03.2021
(73) Patentinhaber: KNORR-BREMSE Systeme für Nutzfahrzeuge GmbH, 80809 München (DE)
(72) Erfinder: WERTH, Alexander, 80999 München (DE); EICHINGER, Markus, 85419 Mauern (DE)
(86) Internationale Anmeldenummer: PCT/EP2019/058177
(87) Internationale Veröffentlichungsnummer: WO 2019/206577

(56) Entgegenhaltungen:
- EP-A2- 1 384 638
- DE-T2- 69 501 956

## Beschreibung

Die vorliegende Erfindung betrifft ein Verfahren zur Anzeige eines Bremsbelagverschlei-ßes einer Fahrzeugbremse.

Eine gattungsgemäße Scheibenbremse ist beispielsweise aus der DE 93 12 119 U1 bekannt. Zum Stand der Technik werden ferner die DE 10 2013 112 813 A1 und in die DE4243875 genannt.

Weiterer zum relevanten Stand der Technik gehört die DE 695 01 956 T2 und die EP 1 384 638 A2.

Eine solche Scheibenbremse mit einem Verschleißpotentiometer, welches über die Verschiebung der Zuspannmechanik den Verschleißvorgang ermittelt, kann nur den Gesamtverschleiß der Reibpaarung aus Bremsbelag und Bremsrotor, also Bremsscheibe oder Bremstrommel, erfassen. Konkret erfolgt die Erfassung einer ersten Größe, nämlich des Verschleißes, beispielsweise durch die Erfassung der Nachstellbewegung einer Nachstellerwelle bzw. einer Mitnehmerwelle. Dazu ist die Sensoreinrichtung bzw. Messanordnung mit einem nicht gezeigten Geber, z.B. einem Hall-Sensor, einem Potentiometer, einem induktiven und/oder optischen oder/und akustischen Geberelement ausgebildet. Der nicht gezeigte Geber ist über eine Sensoranschlussleitung mit einer Auswerteeinheit, beispielsweise in einem Bremssteuergerät, verbunden.

Üblicherweise verschleißt materialbedingt der Reibbelag eines Bremsbelages jedoch verhältnismäßig stärker als der Bremsrotor. Da ein komplett verschlissener Reibbelag zu erheblicher Reduzierung der Bremsleistung führen würde (µ (Stahl-Reibbelag) >0.3; µ (Stahl-Stahl) >0,1), sollte der Verschleißweg so bemessen werden, daß ein Verschleißpotentiometer den Verschleiß dann anzeigt, wenn der Bremsbelag mit dem Reibbelag ein vorgegebenes Verschleißmaß erreicht hat. µ entspricht dabei einem Gleitreibungskoeffizienten (trocken).

Ausgehend von dem vorgenannten Stand der Technik ist es nunmehr Aufgabe der vorliegenden Erfindung, ein Verfahren bereitzustellen mit welchem bei Wechsel von verschlissenen Bremsbelägen ohne gleichzeitigem Wechsel des Bremsrotors nicht aufgrund eines Rotorverschleißes ein Teil des theoretisch nutzbaren Verschleißmaßes eines Bremsbelags verschenkt wird.

Die vorliegende Erfindung löst diese Aufgabe durch ein Verfahren mit den Merkmalen des Anspruchs 1.

Das erfindungsgemäße Verfahren dient der Anzeige eines anstehenden Bremsbelagswechsels einer Fahrzeugbremse. Die Anzeige kann beispielsweise akustisch durch ein Warnsignal, optisch durch Anzeige im Fahrzeug oder auf andere Art und Weise erfolgen.

Das Verfahren kann eine Dicke oder einen Verschleißweg eines Reibbelags eines Bremsbelags insbesondere während eines Bremsvorgangs erfassen und ggf. auch ausgeben. Alternativ oder zusätzlich kann das Verfahren auch lediglich eine Überwachung darstellen, welche das Erreichen eines Grenzwertes eines Verschleißwegs bzw. einer Minimaldicke des Reibbelages des Bremsbelages, welche durch das vorgenannte Verschleißmaß vorgegeben wird, überwacht. Bei Erreichen des Grenzwertes kann die Anzeige zum Belagwechsel durch eine Anzeige in Form eines Signals an den Endnutzer erfolgen.

In beiden Fällen erfolgt eine Anzeige eines Belagwechsels, sei es wenn die Mindestdicke unterschritten wurde, lediglich im Rahmen einer Warnung "Bremsbelag austauschen" oder als konkreter Wert hinsichtlich der Belagdicke. Insofern kann die Anzeige eines anstehenden Belagwechsels im Rahmen der Erfindung als Anzeige von Informationen zum Zustand des Bremsbelages umfassen.

Als Fahrzeuge zum Einsatz der erfindungsgemäße Fahrzeugbremsen können neben PKW's, LKW's oder Zweirädern auch landwirtschaftliche Fahrzeuge, Busse, Züge und dergleichen verstanden werden.

Die Fahrzeugbremse kann auf vielfältige Weise ausgebildet sein. Sie umfasst zumindest einen Bremsbelag und einen Bremsrotor. Ein Bremsbelag wird dabei aus vorzugsweise aus einer Belagträgerplatte und einem auf der Belagträgerplatte angeordneten und mit dem Bremsrotor kontaktierbaren Reibbelag aus einem Reibmaterial gebildet. Der Bremsrotor kann vorzugsweise als eine Bremsscheibe ausgebildet sein, allerdings sind auch Bremstrommeln oder andere Elemente denkbar.

Besonders bevorzugt werden jedoch in einer erfindungsgemäßen Fahrzeugbremse zwei Bremsbeläge eingesetzt, wobei eine Messanordnunganordnung den Belagverschleiß bevorzugt jedes einzelnen Bremsbelags erfassen kann und durch die Steuer- und/oder Auswerteeinheit im Rahmen des erfindungsgemäßen Verfahrens optimiert.

Alternativ kann auch nur die Gesamtheit des Verschleißes beider Bremsbeläge und des Bremsrotors erfasst werden und kein Verschleiß einzelnen Bremsbelags mit dem Bremsrotor.

Die Fahrzeugbremse weist zudem die vorgenannte Messanordnung Ermittlung eines Bremsbelagverschleißes auf. Die Ermittlung kann vorzugsweise berührungslos erfolgen. Diese Messananordnung kann einen Geber, insbesondere ein Sensorelement,

z.B. einen Hall-Sensor, ein Potentiometer, ein induktives und/oder optisches oder/und akustisches Geberelement und eine Steuer- und/oder Auswerteeinheit umfassen. Das Sensorelement kann mechanisch mit einer Zuspannvorrichtung der Bremse gekoppelt sein. Bevorzugt kann es sich bei dem Sensorelement um ein sogenanntes Verschleißpotentiometer handeln. Die Steuer- und/oder Auswerteeinheit kann lediglich als Auswerteeinheit ausgebildet sein. Sie verfügt in an sich bekannter Weise zumindest über ein Rechenwerk, z.B. eine CPU und über einen Datenspeicher. In Auswertung der Messwerte können allerdings auch Steuerbefehle z.B. zum Bedienen einer Warnlampe oder dergleichen erfolgen.

Das erfindungsgemäße Verfahren umfasst zumindest die folgenden Schritte:
a. Erfassen des zeitaktuellen Verschleißes im Bremsbetrieb der Fahrzeugbremse als Summenparameter, welcher zumindest einen einseitigen Verschleiß des Bremsrotors und des zumindest einen Bremsbelages umfasst.

Das Erfassen kann vorzugsweise durch das Verschleißpotentiometer erfolgen, allerdings sind auch andere Varianten denkbar. Das Erfassen des zeitaktuellen Bremsbelagverschleißes berücksichtigt dabei auch messtechnische Gegebenheiten wie die Ansprechzeiten der Messanordnung und dergleichen, so dass es zu einer geringen Messverzögerung kommen kann, welche jedoch das Messergebnis erfahrungsgemäß nicht signifikant beeinflusst. Zeitaktuell bedeutet somit lediglich, dass der Verschleiß nicht zu einem späteren Zeitpunkt, beispielsweise im Ruhezustand des Fahrzeugs ermittelt wird. Ein Verschleiß ist als Differenz der aktuellen Verschleißweges des Bremsbelages und des Bremsrotors (einseitig) gegenüber einem Ausgangsverschleiß des Verschleißweges zwischen dem Bremsbelag und dem Bremsrotor bei der Montage des Bremsbelags zu verstehen. Somit wird durch die Messanordnung nur ein Summenparameter aus dem Bremsbelagverschleiß und Bremsrotorverschleißes ermittelt.

Der Summenparameter umfasst zumindest einen einseitigen Verschleiß des Bremsrotors und einen Verschleiß des zumindest einen Bremsbelages. Er ändert sich daher naturgemäß mit jedem Bremsvorgang.

Der Summenparameter kann allerdings beispielsweise auch einen zweiseitigen Verschleiß des Bremsrotors, z.B. einer Bremsscheibe, und einen Verschleiß zweier beidseitig dem Bremsrotor angeordneter Bremsbeläge umfassen.
b. Anzeige eines ersten Bremsbelagwechsels, bei Erreichen oder Über- oder Unterschreiten eines vorgegebenen ersten Grenzwertes des Summenparameters;

Der vorgegebene erste Grenzwert kann durch eine Kennlinie des Bremsbelages vorgegeben sein, welche auf einem Datenspeicher der Steuer- und/oder Auswerteeinheit als Datensatz hinterlegt ist. Es kann sich bei dem vorgegebenen ersten Grenzwert allerdings auch um einen bereits angepassten Grenzwert handeln. Der erste Bremsbelagwechsel bezieht sich nur auf den Verfahrensablauf, wonach ein zweiter Bremsbelagwechsel auf den ersten Bremsbelagwechsel folgen kann. Der erste Bremsbelagwechsel kann daher im Sinne der vorliegenden Erfindung ein beliebiger z.B. auch ein vierter oder fünfter Bremsbelagswechsel nach eine Austausch des Bremsrotors sein oder aber auch tatsächlich der erste Bremsbelagwechsel nach Inbetriebnahme eines neuwertigen Bremsbelags und eines neuwertigen Bremsrotors.

Der Grenzwert kann eine beliebige Angabe, z.B. eine prozentuale Angabe des Verschleißmaßes oder des Verschleißweges, sein, er sollte optimalerweise jedoch mit dem Belagverschleiß und dem Bremsrotorverschleiß korrelieren.
c. Auswechseln des verbrauchten Bremsbelages ohne Auswechslung des Bremsrotors insbesondere bei Erreichen und/oder Überschreiten oder Unterschreiten des Grenzwertes; und

Das Auswechseln des Bremsbelages kann durch die Steuer- und/oder Auswerteeinheit erfasst werden, so dass die Steuer- und/oder Auswerteeinheit erkennt, dass nunmehr der erste Grenzwert neu angepasst werden muss.
d. Anpassen des ersten Grenzwertes unter Berücksichtigung des Verschleißes des Bremsrotors oder Ermittlung eines Korrekturfaktors um welchen der zeitaktuell ermittelte Verschleiß korrigiert wird.

Das Anpassen des ersten Grenzwertes unter Berücksichtigung des Verschleißes des Bremsrotors erfolgt erfindungsgemäß derart, dass in einem ersten Bremsvorgang nach dem Bremsbelagswechsel der durch die Messanordnung erfasste Verschleiß dem Bremsrotor zugeordnet wird. Entsprechend wird der Grenzwert auf das eigentliche Verschleißmaß des Bremsbelags angepasst, so dass bei anschließenden Bremsvorgängen der erfasste Summenparameter bis zu dem neuen Grenzwert erfolgt.

Durch das erfindungsgemäße Verfahren werden die Bremsbeläge optimal genutzt. Ungenutztes Reibmaterial, welches bei zunehmenden Bremsrotorverschleiß bei einem Belagwechsel mit dem ausgetauschten Bremsbelag weggeworfen werden würde, kann vorteilhaft vermieden werden. Damit einhergehend wird die Betriebsdauer der Bremsbeläge erhöht. Die Anzeige zum Bremsbelagwechsel erfolgt daher beim optimalen Zeitpunkt.

Die Schritte a)-d) des erfindungsgemäßen Verfahrens werden erfindungsgemäß bis zu einem Auswechseln des Bremsrotors wiederholt.

Vorteilhafte Ausgestaltungen der Erfindung sind Gegenstand der Unteransprüche.

Zur Anzeige eines Bremsbelagwechsels nach dem zeitgleichen Auswechseln des Bremsrotors und des Bremsbelages ein Festwert als erster Grenzwert genutzt wird. Dieser Festwert kann z.B. aus einer Kennlinie des Bremsbelags entnommen werden.

Ein den Bremsrotorverschleiß repräsentierender Wert kann bei jedem Belagwechsel ermittelt wird, wobei zur Anzeige eines Bremsscheibenwechsels ein zweiter Grenzwert, vorzugsweise als Festwert, mit dem ermittelten den Bremsrotorverschleiß repräsentierenden Wert verglichen wird. Der Bremsrotorverschleiß kann bis zur Auswechslung des Bremsrotors nach jedem Belagwechsel ermittelt und beispielsweise aufaddiert werden, bis er den vorgenannten Grenzwert überschreitet. Der Grenzwert kann dabei vorteilhaft so bemessen sein, dass der Austausch des Bremsrotors erst bei einem nächsten Belagwechsel erforderlich ist.

Zur Ermittlung des Belagverschleißes durch eine Messanordnung hat sich ein Verschleißpotentiometer bereits auch in der Vergangenheit als besonders zuverlässig erwiesen.

Es ist von Vorteil wenn Schritt d) durch Abgleich eines bei einer ersten Bremsung nach dem ersten Bremsbelagswechsel ermittelten ersten Startwertes mit einem analog ermittelten zweite Startwert beim vorhergehenden Bremsbelagwechsel oder mit einem Startwert einer Kennlinie erfolgt welcher z.B. in der Messanordnung hinterlegt ist.

Das Verfahren kann insbesondere zur Ermittlung des Zeitpunktes eines notwendigen Wechsels eines Bremsbelages genutzt werden.

Das Verfahren kann zusätzlich vorteilhaft auch zur Ermittlung des Zeitpunktes eines notwendigen Wechsels eines Bremsrotors genutzt werden.

Besonders bevorzugt erfolgt das sensorische Erfassen in Schritt a) berührungslos.

Die Steuer- und/oder Auswerteeinheit kann zudem bei der Anzeige des Belagswechsels die Standzeit des Fahrzeugs mit der Fahrzeugbremse berücksichtigen. Besonders bevorzugt kann damit einhergehende Änderung des Belagverschleiß durch einen Auswertealgorithmus entsprechend angepasst werden. Dieser Auswertealgorithmus kann beispielsweise durch Standversuche und/oder durch Simulationsprogramme ermittelt werden.

Nachfolgend wird die Erfindung anhand eines Ausführungsbeispiels und mit Hilfe der beiliegenden Figuren näher erläutert. Das Ausführungsbeispiel ist in keinster Weise beschränkend für den Gegenstand der Erfindung zu verstehen. Insbesondere sind auch mehrere Einzelmerkmale der nachfolgend Ausführungsvariante im Kontext der vorliegenden Erfindung auch gesondert und losgelöst vom Ausführungsbeispiel zu verstehen. Insbesondere ist die Erfindung nicht zwingend auf eine Scheibenbremse beschränkt, sondern kann auch auf eine Trommelbremse angewandt werden. Die Erfindung ist nur durch den Umfang der beigefügten Ansprüche beschränkt.

Es zeigen:
- Fig. 1a - 1c: schematische Darstellung einer Scheibenbremse mit unterschiedlichen Abnutzungsgraden; und
- Fig. 2: Kennlinie einer Messanordnung zur Ermittlung eines Verschleißes einer erfindungsgemäßen Scheibenbremse ;
- Fig. 3: Darstellung einer Zuspannvorrichtung mit einer gattungsgemäßen Scheibenbremse nach dem Stand der Technik;
- Fig. 4: Darstellung der gattungsgemäßen Scheibenbremse der Fig. 3
- Fig. 5: Darstellung einer Messanordnung an einer gattungsgemäßen Scheibenbremse nach dem Stand der Technik ;
- Fig. 6, 7a, 7B: Detaildarstellungen der Messanordnung der Fig. 5.

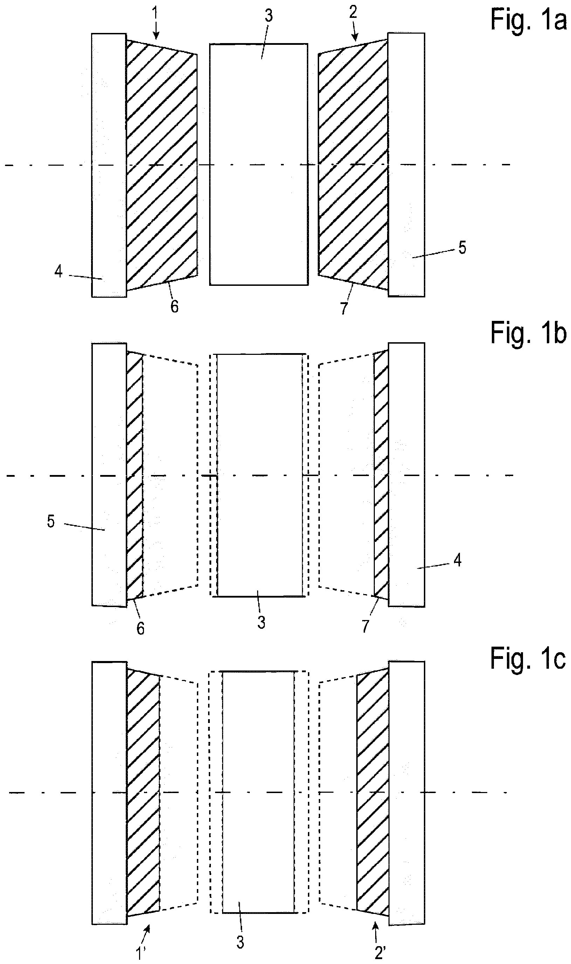

**Fig. 1** zeigt eine Anordnung zweier Bremsbeläge 1, 2 und einer Bremsscheibe 3 einer Scheibenbremse, die ansonsten nicht dargestellt ist (wegen US bitte Bild Scheibenbremse zufügen, Herr Herzig hat da ein Standardbild) . Die Art der Scheibenbremse ist dabei nicht auf eine spezielle Bauform beschränkt. So können die Bremsbeläge in einem Bremsbelagshalters einer Scheibenbremse, beispielsweise in einem Bremssattel oder in einem Zangenhebel einer Bremszange eingesetzt werden.

In Fig. 1 weisen die Bremsbeläge 1, 2 jeweils eine Belagträgerplatte 4, 5 und einen Reibbelag 6, 7 auf.

Zwischen den Bremsbelägen 1, 2 ist die Bremsscheibe 3 der Scheibenbremse angeordnet.

Die Scheibenbremse weist eine Messanordnung zum Ermitteln der Bremsbelagstärke wenigstens eines der Bremsbeläge 1 und/oder 2 auf.

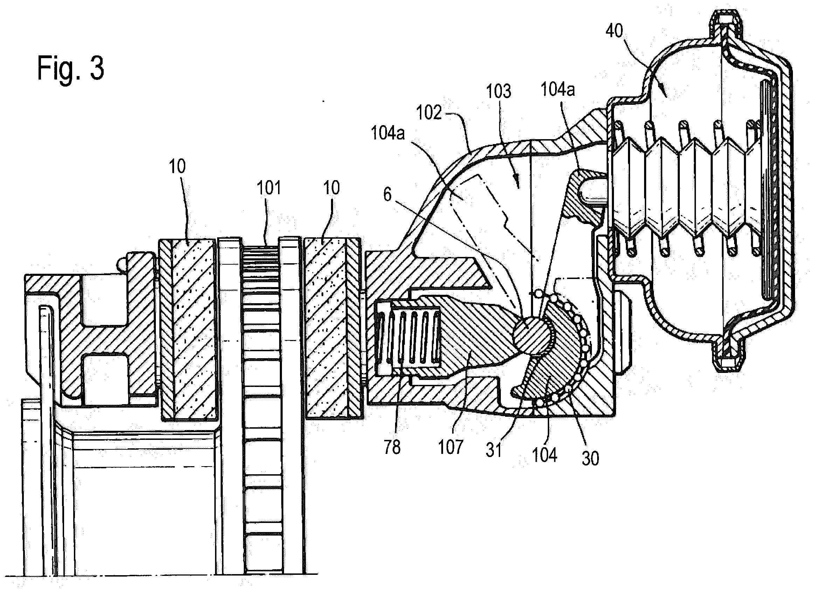

Entsprechende Vorrichtungen sind dem Fachmann als sogenannte Verschleißpotentiometer bekannt. Ein geeignetes Verschleißpotentiometer ist beispielsweise in der Bauform der DE 93 12 119 U1 im Detail offenbart, auf deren Offenbarung hinsichtlich des konstruktiven Aufbaus eines Verschleißpotentiometers und dessen Anordnung an einem Bremsbelag im Rahmen der vorliegenden Erfindung vollumfänglich Bezug genommen wird und nachfolgend nochmals anhand der **Fig. 3****,** **4****,** **5****,** **6, 7A und 7B** erläutert wird.

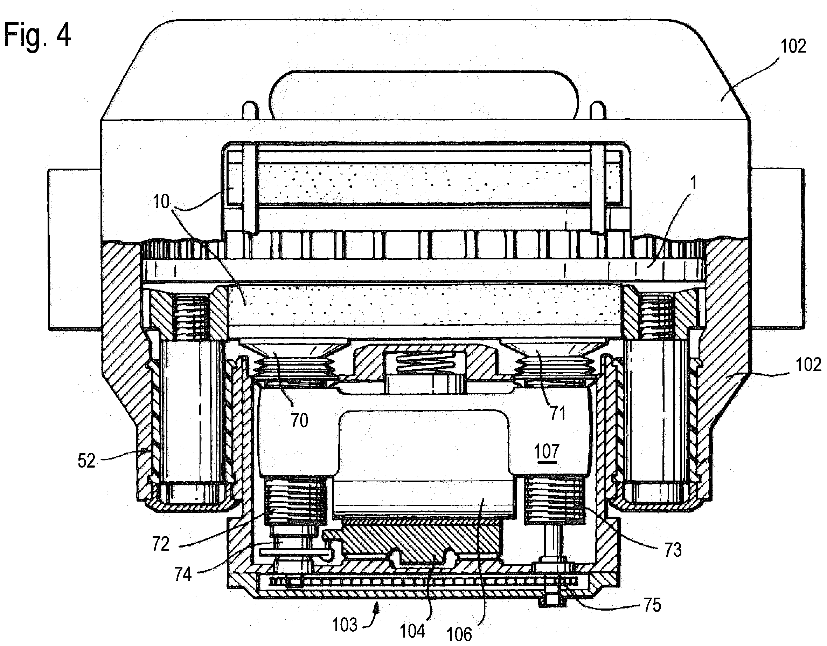

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist. Wie aus Flg. 3 zu erkennen ist wird eine innenbelüftete Bremsscheibe 101, die an einer nicht näher bezeichneten Achse eines Nutzfahrzeugs befestigt ist, von einem Bremssattel 102 umfaßt, welcher gemäß Fig. 4 mittels eines starren Führungslagers sowie mittels eines Ausgleichslagers in axialer Verschiebbarkeit bezüglich der Bremsscheibe 101 am Fahrzeug gelagert ist. Im übrigen sind Aufbau und Funktion des Bremssattels bekannt, so daß sich eine nähere Erläuterung erübrigt.

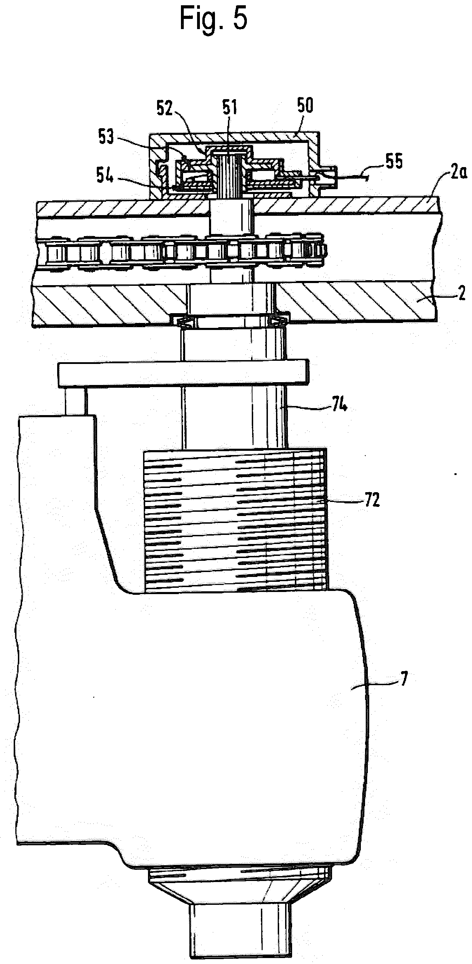

Auf der in Fig. 3 rechten bzw. der in Fig. 4 unteren Seite der Bremsscheibe 101 ist eine schematisch mit dem Bezugszeichen 103 bezeichnete (zweispindelige) Zuspannvorrichtung angeordnet. Im Bremssattel 102 ist ein im wesentlichen halbkreisförmiges Drehlager 30 vorgesehen, dessen Drehachse parallel zur Ebene der Bremsscheibe 101 verläuft und das den entsprechend abgerundeten Bereich eines Drehhebels 104 aufnimmt, so daß der Drehhebel 104 parallel zur Ebene der Bremsscheibe 101 verschwenkt werden kann. Zur Betätigung des Drehhebels 104 ist ein lediglich schematisch dargestellter Bremszylinder 40 vorgesehen, der mit einem Kolben in eine geeignet geformte Ausnehmung eines Betätigungsarms 104a des Drehhebels 104 eingreift. Wenn der Bremszylinder 40 mit der Druckluft beaufschlagt wird, wird der Betätigungsarm 104a des Drehhebels 104 folglich von seiner Ruheposition in die in Fig. 5 in gestrichelter Darstellung angedeutete Position bewegt.

Die dem halbschalenförmigen Drehlager 30 abgewandte Seite des Drehhebels 104 ist über einen als Nocken dienenden Exzenter 106 mit einer Traverse 107 gekoppelt, die sich innerhalb des Bremssattels 102 im wesentlichen parallel zur Drehachse der Bremsscheibe 101 erstreckt und in dieser Ebene verschiebbar gelagert ist. An ihrem der Bremsscheibe 101 zugewandten Ende weist die Traverse 107 eine sacklochartige Ausnehmung auf, die von einem in Richtung zur Bremsscheibe 101 auskragenden, rohrartigen Ansatz umgeben ist. Dieser Ansatz der Traverse 107 ist in einer entsprechenden Ausnehmung des Bremssatteis 102 rechtwinklig zur Ebene der Bremsscheibe 101 unter Beibehaltung eines derartigen Spiels schiebegelagert, daß die Traverse 107 geringfügige Schwenkbewegungen in der Zeichnungsebene ausführen kann. Innerhalb der Ausnehmung ist eine Spiralfeder 78 angeordnet, die zwischen die Traverse 107 und das der Bremsscheibe 101 zugewandte Ende des Bremssattels 102 eingespannt ist und dadurch die Traverse 107 zum Drehhebel 104 hin vorspannt.

Wie insbesondere dem Längsschnitt der Fig. 4 entnehmbar ist, weist die Traverse 107 an beiden Seiten jeweils eine mit einem Innengewinde versehene Bohrung auf, in der jeweils eine Stellspindel 72 bzw. 73 justierbar verschraubt ist, deren in Fig. 5 dargestelltes Außengewinde in einem entsprechend geformten Innengewinde der Traverse 107 geführt ist. An dem der Bremsscheibe 101 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 107 senkrecht zur Ebene der Bremsscheibe 101 erstrecken, liegen die Druckstücke 70 und 71 mit ihren flachen Enden an einer Bremsbacke 10 an.

Im Inneren der Stellspindel 72 ist eine Nachstelleinrichtung 74 angeordnet, die über eine Axialverzahnung drehfest mit der Stellspindel 72 gekoppelt ist, so daß die axiale Verschiebbarkeit der Stellspindel 72 gewährleistet ist. Die Nachstelleinrichtung 74 wird bei jeder Betätigung des Drehhebels 104 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 107, die demzufolge lediglich eine einzige Stellspindel und damit nur ein Druckstück aufweist, wird die Stellspindel beispielsweise in der Mitte der Traverse 107 angeordnet, während der Exzenter 106 sowie die die Druckfeder aufweisende Lagerung der Traverse 107 jeweils in zweifacher Ausfertigung auf beiden Seiten der zentralen Stellspindel vorgesehen sind.

Nachfolgend wird das Arbeitsprinzip der Zuspanneinrichtung kurz erläutert. Bei Druckluftbeaufschlagung des Bremszylinders 40 wird der Betätigungsarm 104a gemäß Fig. 3 nach links verschwenkt, wodurch der am Drehhebel 104 wirkende Exzenter 106 um eine entsprechend den Hebelgesetzen verringerte Strecke gleichfalls nach links verschoben wird. Die Traverse 107 wird daher entgegen der Vorspannkraft der Spiralfeder 78 um diese Wegstrecke zur Bremsscheibe 101 hin gedrückt. Die an der Traverse 107 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 101. Wenn der Betätigungsarm 104a weiter nach links verschwenkt wird, verschiebt sich der Bremssattel aufgrund der auf die Bremsscheibe 101 ausgeübten Kraft in Fig. 3 nach rechts, so daß schließlich auch die linke Bremsbacke 10 gegen die Bremsscheibe 101 gepreßt wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 104 betätigt. Sofern das Lüftspiel korrekt eingestellt ist, liegen beide Bremsbacken 10 zu diesem Zeitpunkt an der Bremsscheibe 101 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden
die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Der augenblickliche Betrag des Belagverschleißes wird erfindungsgemäß mittels eines Belagverschleißdetektors erfaßt, dessen genauer Aufbau in Fig.5 gezeigt ist.

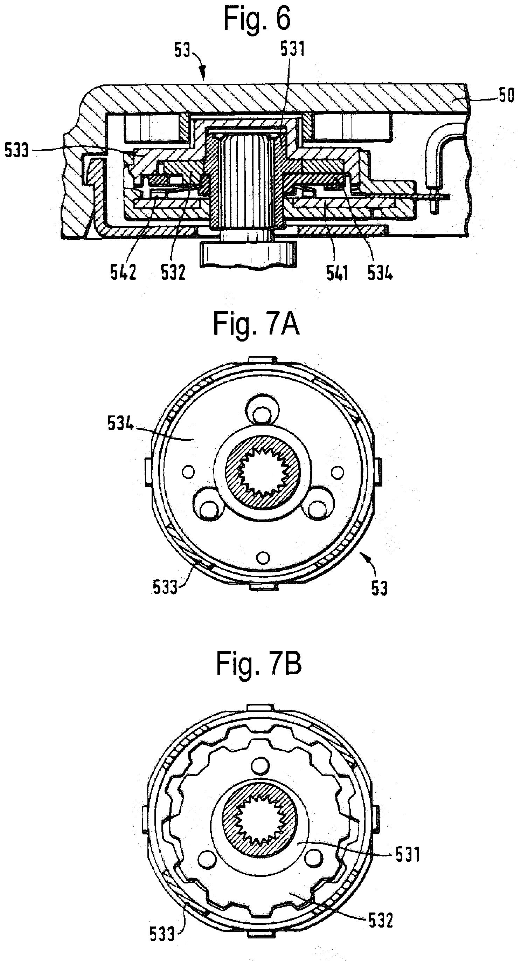

Es sei an dieser Stelle darauf hingewiesen, daß der Belagverschleißdetektor, wie in Fig.6 angedeutet, vorzugsweise am bremsscheibenabgewandten Ende der Nachstelleinrichtung 74 vorgesehen ist; jedoch ist es prinzipiell auch möglich, den Belagverschleißdetektor an anderer Stelle vorzusehen, wie beispielsweise am bremsscheibenabgewandten Ende der die zweite Stellspindel 73 mit der Nachstelleinrichtung 74 koppelnden Welle (deren Ende wird jedoch bevorzugt mit einem Sechskant-Drehkopf zum Rückstellen der Spindeln versehen, so daß das Ende der Nachstelleinrichtung für die Ankopplung Belagverschfeißdetektors, geeigneter erscheint). In jedem Fall ist dafür Sorge zu tragen, daß der erfindungsgemäße Belagverschleißdetektor so angekoppelt wird, daß er eine zur Drehung der Nachstelleinrichtung snychrone Drehbewegung erfaßt.

Wie aus den Fig. 5 und 6 hervorgeht, greift das bremsscheibenabgewandte Ende der Nachstelleinrichtung 74 mittels eines Ritzels 51 in eine entsprechende axiale Innenverzahnung eines Untersetzungsgetriebes 53 derart ein, daß dieses bei jeder Drehbewegung der Nachstelleinrichtung 74 angetrieben wird. Mit dem Abtrieb des Untersetzungsgetriebes 53 ist ein Drehwinkelsensor als Sensorelement einer Messanordnung in Form eines Drehpotentiometers 54, auch Verschleißpotentiometer genannt, in der Weise gekoppelt, daß ein Schleifer 542 (siehe Fig.6) des Drehpotentiometers 54 um einen um den Untersetzungsfaktor des Getriebes 53 verringerten Drehwinkel gedreht wird. Die Kopplung von Untersetzungsgetriebe 53 und Drehpotentiometer 54 ist dabei so justiert, daß der Schleifer 542 in der obersten Stellung der Drehspindel {"volle Belagstärke") die eine Endposition einer Widerstandsbahn 541 berührt, so daß das Drehpotentiometer 54 beispielsweise den niedrigsten Widerstandswert aufweist; andererseits ist das Untersetzungsverhältnis des Getriebes 53 so gewählt, daß der Schleifer 542 in der untersten Stellung der Drehspindel ("Bremsbelag vollständig aufgebraucht") die andere Endposition der Widerstandsbahn 541 berührt, so daß das Drehpotentiometer 54 seinen höchsten Widerstandswert aufweist.

Selbstverständlich ist es auch möglich, das Verhältnis der Widerstandswerte umgekehrt zu wählen, was jedoch in gleicher Weise durch Vertauschen der über eine lediglich schematisch gezeigte Leitung 55 nach außen geführten Anschlüsse des Drehpotentiometers 54 erzielbar ist.

Wie insbesondere aus den Fig.7A und 7B zu erkennen ist, ist das Untersetzungsgetriebe 53 als Zykloidengetriebe ausgebildet, bei dem die mit dem Ritzel 51 der Nachstelleinrichtung 74 gekoppelte Antriebswelle auf einen Exzenter 531 einwirkt, der ein mit einer Außenverzahnung versehenes Getriebe-Innenrad 532 in der Weise in einer exzentrischen Umlaufbahn dreht, daß lediglich ein Teil seiner Zähne in Eingriff mit einem Getriebe-Außenrad 533 steht, das eine entsprechende Innenverzahnung aufweist und gleichzeitig als Gehäuse des Getriebes 53 dient.

Gemäß Fig.7B wirkt das Getriebe-Innenrad 532 über drei Stifte auf drei zugeordnete, etwa den doppelten Durchmesser aufweisende Bohrungen einer Abtriebsscheibe 534 ein; diese ist mit dem Schleifer 542 des Drehpotentiometers 54 gekoppelt. Im übrigen ist der Aufbau eines derartigen Zykloidengetriebes bekannt, so daß auf eine nähere Erläuterung seiner Funktionsweise verzichtet wird.

Es sei jedoch angemerkt, daß jedes andere Getriebe verwendet werden kann, das trotz eines hohen Untersetzungsfaktors eine kompakte Bauform aufweist, wie etwa ein Planetenradgetriebe.

Um zu verhindern, daß während des Zuspannvorgangs auftretende Schwenkbewegungen der Nachstelleinrichtung 74 zu einer Verfälschung
des Ausgangssignals des Drehpotentiometers 54 führen, ist das Untersetzungsgetriebe 53 in einer nicht näher gezeigten Lagerungsvorrichtung gelagert, die das Untersetzungsgetriebe 53 zwar drehfest, jedoch unter Aufrecht erhaltung einer Längs- und Querverschiebbarkeit trägt. Die Lagerungsvorrichtung kann aus einem längsverschiebbar gelagerten Längsschlitten bestehen, in dessen Mitte ein Querschlitten querverschiebbar gelagert wird, der seinerseits das Untersetzungsgetriebe trägt. Die auf diese Weise gebildete Lagerungsvorrichtung ist an einer Gehäuseabdeckung befestigt, die gleichzeitig zum Schutz des Belagverschleißdetektors dient. Dabei stützt sich der Längsschlitten an entsprechenden, nach innen gerichteten Vorsprüngen der Gehäuseabdeckung ab.

Obgleich die Lagerungsvorrichtung 52, wie aus den Fig. 5 und 6 zu erkennen ist, an der Gehäuseabdeckung 50 befestigt ist, so daß das Drehpotentiometer 54 unterhalb des Untersetzungsgetriebes 53 angeordnet ist, ist es gleichwohl auch möglich, eine umgekehrte Anordnung vorzusehen, falls dies von Vorteil ist. In jedem Fall wird das Untersetzungsgetriebe 53 zusammen mit dem Drehpotentiometer 54 vorzugsweise als eine integrierte Baueinheit ausgeführt, die eine entsprechend einfache Montage und Lagerhaltung gewährleistet.

Das Drehpotentiometer 54 wird über die Leitung 55 mit einer nicht näher gezeigten Anzeigeeinrichtung im Führerhaus des Nutzfahrzeugs verbunden, so daß der Fahrer, ggf· unter Zwischenschaltung einer Auswertungs- oder Treiberelektronik, genaue Informationen über den jeweiligen Wert der Bremsbelagstärke erhält. Falls eine Auswertungselektronik verwendet wird, ist es möglich, aus dem Ausgangs signal des Drehpotentiometers 54 weitere Informationen abzuleiten, wie insbesondere den Wert des Lüftspiels oder eine eventuelle Überhitzung der Scheibenbremse. Zum Anschluß
des Drehpotentiomters 54 kann im einfachsten Fall eine einzige Signalleitung verwendet werden, wobei der andere Kontakt des Potentiometers 54 mit der Fahrzeugmasse verbunden ist, so daß das erzeugte Signal den Widerstandswert gegenüber der Fahrzeugmasse darstellt. Selbstverständlich ist es auch möglich, beide Endkontakte oder zusätzlich auch den Mittelabgriff des Potentiometers 54 über eine Zweifach- bzw. Dreifachleitung der Anzeigeeinrichtung zuzuführen, falls dies für die Signalauswertung von Vorteil ist.

Anstelle eines Drehpotentiometers kann als Sensorelement auch eine andere Art von Drehwinkelsensor verwendet werden, wie z.B. ein optischer oder magnetischer Drehwinkelgeber, wobei der Untersetzungsfaktor des Untersetzungsgetriebes hierbei so gewählt werden sollte, daß die von der Nachstelleinrichtung 74 während des gesamten Nachstellzyklus' insgesamt durchgeführten Umdrehungen auf etwas weniger als eine 360-Grad-Umdrehung reduziert werden, um ein eindeutiges Signal zu erhalten. Bei Verwendung eines derartigen Gebers kann der Abtrieb des Untersetzungsgetriebes 53 mit einer optischen Codierscheibe bzw. einer mit Magneten versehenen Umfangsfläche gekoppelt sein, die auf mindestens ein ortsfestes Sensorelement (Leuchtdiode bzw. Hall-Element) einwirkt. Jedochist sowohl der Aufbau eines derartigen Drehwinkelsensors als auch die Signalauswertung wesentlich aufwendiger als bei dem vorbeschriebenen Drehpotentiometer, so daß dieses in der Praxis vorzuziehen ist.

Bei der erläuterten Ausführungsform der Zuspannvorrichtung 103 erfolgt die Kraftübersetzung mittels eines drehbar gelagerten Hebels 104, der über einen Exzenter auf eine Traverse 107 einwirkt; das Prinzip der Erfindung ist jedoch selbstverständlich auch bei anderen Zuspannvorrichtungen verwendbar, etwa bei solchen, bei denen die Kraftübersetzung mittels eines Spreizkeils oder einer Kugelrampe erfolgt. Ebenso ist die Erfindung nicht auf die gezeigten Ausführungsformen von Stellspindel und Nachstelleinrichtung beschränkt; das erfindungsgemäße Untersetzungsgetriebe kann vielmehr bei allen Stellelementen verwendet werden, deren axiale Relativlage zur Bremsscheibe mit zunehmendem Belagverschleiß von einer geeigneten Antriebseinrichtung verändert wird.

Nach der vorhergehenden ausführlichen Beschreibung wird nachfolgend nur kurz zusammenfassend auf das Messprinzip eines Verschleißpotentiometer eingegangen.

Typischerweise ist ein Messgeber in Form eines Verschleißpotentiometers mechanisch mit einer Nachstellvorrichtung der Bremse verbunden. Beim Anbremsen erfolgt eine mechanische Kopplung des Potentiometers, welches vorzugsweise als Drehpotentiometer ausgebildet ist, mit der Nachstellvorrichtung. Teil der Kopplung kann ein Planetengetriebe sein, welches eine Übersetzung realisiert.

Diese mechanische Messung kann durch eine Steuer- und/oder Auswerteeinrichtung in ein elektrisches Signal umgewandelt werden.

Somit kann eine Bremsbelagstärke des wenigstens einen Bremsbelags 1, 2 berührungslos durch den Verschleißpotentiometer erfasst und durch Zusammenwirken mit der Steuer- und/oder Auswerteeinrichtung in ein das jeweilige Maß der Bremsbelagstärke repräsentierendes Ausgangssignal umgewandelt werden.

Ein jeder Bremsbelag 1 und 2 umfasst eine Belagträgerplatte 4, 5 und einen Reibbelag 6, 7.

Dabei wird durch das Verschleißpotentiometer der Abstand zwischen einem berührungslos arbeitenden Sensorelement der Messanordnung und einer zu dem berührungslos arbeitenden Sensorelement weisenden Seitenfläche der Bremsscheibe 3 wenigstens in der Bremszuspannstellung berührungslos erfasst.

Ein Fahrzeug mit einem Verschleißpotentiometer kann nur den Gesamtverschleiß der Reibpaarung aus Bremsbelag und Bremsrotor, also Bremsscheibe oder Bremstrommel, erfassen.

Allerdings werden bei einem Fahrzeug häufiger die Bremsbeläge als die Bremsscheibe ausgetauscht, da hier der Abtrag des Reibmaterials des Reibbelags 6 oder 7 höher ist als bei der Bremsscheibe 3.

Anhand der Fig. 1a bis 1c wird die sich daraus ergebende Folge für die Messung der Bremsbelagstärke durch den Verschleißpotentiometer erörtert werden.

In Fig. 1a werden sowohl neue Bremsbeläge 1, 2 als auch eine neue Bremsscheibe 3 benutzt. Dabei ist das Verschleiß-Potentiometer zur Auslösung der "Belagverschleiß-Ende Erreicht"-Anzeige derart ausgebildet, daß sich bei Erreichen eines voreingestellten Grenzwertes des Verschleißmaßes der Signalwert sich sprunghaft ändert. Dies wird auch als Sprungpunkt bezeichnet.

Das vorbestimmte Verschleißmaß ist in Fig. 1 ist erreicht, wenn eine optimale Menge an Reibmaterial vom Bremsbelag abgetragen.

Zugleich wurde allerdings auch ein Teil des Materials der Bremsscheibe abgetragen.

Fig. 1b zeigt die Situation nach erstmaligem Wechsel der Bremsbeläge 1, 2 durch neue Bremsbeläge 1' 2'. Dabei wird das Verschleißpotentiometer allerdings beim ersten Anbremsen bereits einen Teilverschleiß bemerken, welcher eigentlich der Bremsscheibe 3 zuzuordnen ist..

Bei Belagverschleißerkennung mit fest eingestelltem Grenzwert würde der Sprungpunkt bei jedem Belagswechsel etwas früher erreicht werden, da der Verschleiß der Scheibenbremse in den Belagverschleiß mit eingeht.

Im Ergebnis wird die Anzeige zum Belagwechsel in der Situation der Fig. 1b bereits ausgelöst bevor der optimale Anteil an Reibmaterial abgetragen wurde.

Fig. 1c stellt einen nachfolgenden' Belagwechsel ohne Austausch der Bremsscheibe dar.

In der Gesamtschau zwischen den Fig. 1a bis 1c erkennt man, dass bei jedem Bremsbelagwechsel immer mehr ungenutztes Reibmaterial zum Zeitpunkt des Erreichen des Sprungpunktes vorliegt.

Um einen optimalen Materialverbrauch des Reibmaterials bei jedem Belagwechsel zu ermöglichen, sollte daher sowohl der Belagverschleiß als auch der Scheibenverschleiß erfasst werden.

Dafür ist es erforderlich, daß der Grenzwert bei welchem ein Belagwechsel angezeigt wird, kein fester Wert ist, sondern zumindest bei jedem Belagwechsel angepasst wird.

Da ein Verschleißsignal vor einem Belagwechsel und nach einem Belagwechsel vorliegt, ist es möglich diese beiden Signale zu vergleichen und auszuwerten. Dies kann beispielsweise durch die Steuer- und/oder Auswerteeinheit erfolgen.

Das Gesamtverschleissmass einer neuen Scheibe und von neuen Belägen muss zu Beginn des Einsatzes durch die Messanordnung ermittelt werden. Dabei erfolgt ein Speichern der Größe "Verschleißmaß-neu" als erster Grenzwert.

Dies kann vor dem ersten Wechsel der Bremsbeläge einem voreingestellten Spanungswert entsprechen. Wenn nun das Gesamtverschleissmass in seinem Umfang um den zulässigen Verschleiß der Beläge reduziert wird, ergibt sich ein Maß, welche das Verschleißende repräsentiert und ein Spannungswert für die Anzeige "Belagwechsel" kann ausgegeben werden.

Wird nun ein Belagwechsel durchgeführt, so ergibt sich nach dem Einsetzen der neuen Beläge ein neuer Spannungswert bzw. ein neues Signal welches das "Verschleißmaß nach 1. Belag Wechsel" repräsentiert und welches um den Betrag des Scheibenverschleiß verändert ist. Dieser Wert ergibt nun den neuen Startwert bzw. einen zweiten Grenzwert für die Belagverschleiß-Grenze.

Das Erkennen eines Belagwechsel kann beispielsweise automatisch erfolgen , indem die Scheibenbremse feststellt, dass sich das Verschleißsignal in kurzer Zeit erheblich und entgegengesetzt zur Verschleiß-Richtung verändert hat, was alternativ auch bei einem sogenannten Zurückdrehen der Beläge stattfinden kann.

Weiterhin, kann auch das Löschen der Fehlermeldung "Beläge erneuern" beim Service erfasst werden und als Belagwechsel erkannt werden. Somit wird der Startpunkt für den Belagverschleiß bei jedem neuen Belag eingelernt oder anders ausgedrückt, der Grenzwert wird bei jedem neuen Belag angepasst.

Zusätzlich kann durch ein Aufsummieren der Differenzen der Grenzwerte, welche bei erstmaliger Benutzung der Bremse nach jedem Belagwechsel eingestellt werden können ein Scheibenverschleiß detektiert werden.

Differenz = angepasster Grenzwert (bei aktuellem Belagwechsel) - angepasster Grenzwert (bei vorhergehendem Belagwechsel).

Anhand der Veränderung nach jedem Belagwechsle kann somit auch der Scheibenverschleiß erfasst werden.

Durch Verwendung der Funktion ist es möglich auf eine Restbelagstärke zu verzichten, oder/und die Reibbelagstärke besser auszunutzen.

Die Reibverschleiß-Erkennung kann zusätzlich optimiert werden durch indem in die Auswertung durch die Steuer- und/oder Auswerteeinheit auch Daten hinsichtlich der Standzeit des Fahrzeugs und der Baumaße der verwendeten Bremsbeläge eingehen. Zur Wahrung gleichbleibender Baumaße kann eine Kodierung genutzt werden.

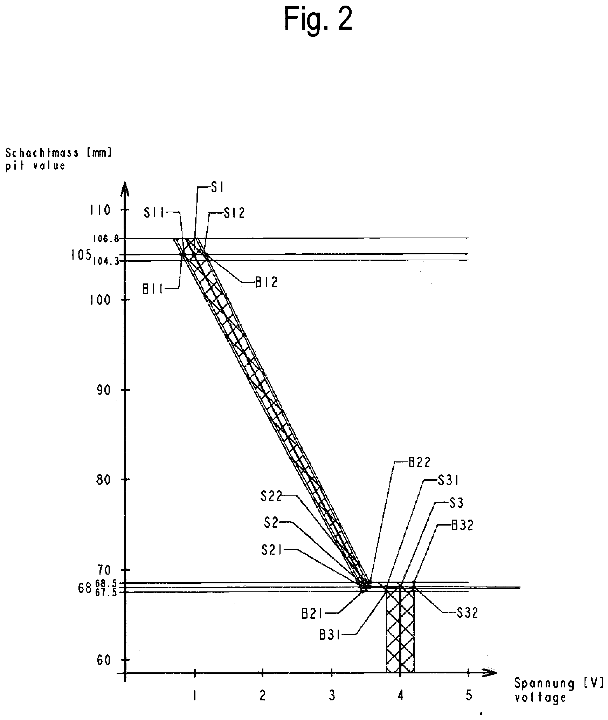

Fig. 2 zeigt eine Kennlinie eines Verschleißpotentiometers mit und den angepassten Verlauf der Kennlinie nach dem Belagwechsel.

Man erkennt einen linearen Verlauf der Kennlinie vom ersten Einsatz des Bremsbelags bei etwa 1 Volt bis hin zum verschlissenen Zustand des Bremsbelages bei etwa 3,5 Volt. Danach ist ein Sprung auf 4 Volt erkennbar.

Diese Kennlinie muss nach dem ersten Belagwechsel bezogen auf das Wechselintervall des Bremsrotors, insbesondere der Scheibenbremse, um den Betrag angepasst werden, um welchen die Scheibenbremse verschlissen wurde. Diese Anpassung kann bedeuten, dass der Startpunkt der Kennlinie von 1 Volt auf 1,1 Volt hochgesetzt wird. Entsprechend kann auch der Grenzwert auf 3,6 V und der Sprung auf 4,1 V erhöht werden.

Der Verschleiß der Bremsscheibe 3 kann mit dem ersten Anbremsen nach dem Belagwechsel bestimmt werden. Dabei würde bereits ein Verschleiß des Belages angezeigt werden, welcher eigentlich dem Verschleiß der Bremsscheibe 3 entspricht. Dieser Verschleiß kann durch die Steuer- und/oder Auswerteeinheit ermittelt und in ein Spannungssignal oder spannungsäquivalentes Signal umgewandelt werden.

Die Differenz zwischen dem voreingestellten Startwert z.B. bei 1 V und dem neu ermittelten Startwert von 1,1 V beträgt 0,1 V. Um diesen Betrag kann auch der Grenzwert, welcher den Verschleiß repräsentiert angepasst werden.

Es ist jedoch auch möglich, dass bei anderen Kennlinienformen der Grenzwert nach der Ermittlung des Startwertes um einen höheren oder geringeren Betrag angepasst wird als die Differenz zwischen den beiden vorgenannten Startwerten.

Da die Grenzwerte stets um den Betrag des Scheibenverschleißes aufaddiert werden, kann auf der Steuer- und/oder Auswerteeinheit zudem ein Grenzwert für den Bremsscheibenverschleiß hinterlegt sein. Überschreitet z.B. der ermittelte Startwert beispielsweise diesen weiteren Grenzwert, so kann dies bedeuten, dass beim nächsten Wechsel ein Bremsscheiben- und gleichzeitig auch ein Bremsbelagswechsel ansteht.

### BEZUGSZEICHENLISTE

- 1: Bremsbelag
- 1': Bremsbelag
- 2: Bremsbelag
- 2': Bremsbelag
- 3: Bremsrotor in Form einer Bremsscheibe
- 4: Belagträgerplatte
- 5: Belagträgerplatte
- 6: Reibbelag
- 7: Reibbelag
- 10: Bremsbacke
- 30: Drehlager
- 40: Bremszylinder
- 50: Gehäuseabdeckung
- 51: Ritzel
- 52: Lagerungsvorrichtung
- 53: Untersetzungsgetriebe
- 54: Drehpotentiometers
- 55: Leitung
- 70: Druckstück
- 71: Druckstück
- 72: Stellspindel
- 73: Stellspindel
- 74: Nachstelleinrichtung, Drehspindel
- 75: Synchronisationseinrichtung
- 78: Spiralfeder
- 101: Bremsscheibe
- 102: Bremssattel
- 103: Zuspannvorrichtung
- 104: Drehhebel
- 104a: Betätigungsarm
- 106: Exzenter
- 107: Traverse
- 531: Exzenter
- 532: Getriebe-Innenrand
- 533: Getriebe-Außenrand
- 541: Widerstandsbahn
- 542: Schleifer

## Patentansprüche

1. Verfahren zur Anzeige eines anstehenden Bremsbelagswechsels einer Fahrzeugbremse umfassend zumindest einen Bremsbelag (1, 2, 1', 2') und einen Bremsrotor (3), wobei die Fahrzeugbremse eine Messanordnung zur Ermittlung eines Verschleißes, umfassend ein Sensorelement und eine Steuer- und/oder Auswerteeinheit, aufweist, wobei das Verfahren zumindest die folgenden Schritte umfasst:
a. Erfassen des zeitaktuellen Verschleißes im Bremsbetrieb der Fahrzeugbremse als Summenparameter welcher zumindest einen einseitigen Verschleiß des Bremsrotors (3) und des zumindest einen Bremsbelages (1, 2) umfasst; wobei dieser Verschleiß die Differenz des aktuellen Verschleißweges des Bremsbelages und des Bremsrotors gegenüber einem Ausgangsverschleiß des Verschleißweges zwischen dem Bremsbelag und dem Bremsrotor bei der Montage des Bremsbelags ist;
b. Anzeige eines ersten Bremsbelagwechsels, bei Erreichen oder Über- oder Unterschreiten eines vorgegebenen ersten Grenzwertes des Summenparameters;
c. Auswechseln des verbrauchten Bremsbelages (1, 2) gegen einen neuen Bremsbelag (1', 2') ohne Auswechslung des Bremsrotors (3); und
d. Anpassen des ersten Grenzwertes unter Berücksichtigung des Verschleißes des Bremsrotors (3) oder Etablierung eines Korrekturfaktors auf Grundlage des Verschleißes des Bremsrotors (3), zur Korrektur eines zeitaktuell ermittelte Verschleiß des neuen Bremsbelages (1', 2') und des Bremsrotors (3), wobei das Anpassen des ersten Grenzwertes unter Berücksichtigung des Verschleißes des Bremsrotors (3) derart erfolgt, derart dass in einem ersten Bremsvorgang nach dem Bremsbelagswechsel der durch die Messanordnung erfasste Verschleiß dem Bremsrotor (3) zugeordnet wird und entsprechend der Grenzwert auf das eigentliche Verschleißmaß des Bremsbelags (2') angepasst wird, so dass bei anschließenden Bremsvorgängen der erfasste Summenparameter bis zu dem neuen Grenzwert erfolgt, und wobei die Schritte a)-d) bis zu einem Auswechseln des Bremsrotors (3) wiederholt werden.

2. Verfahren nach Anspruch 1, **dadurch gekennzeichnet, dass** zur Anzeige eines Bremsbelagwechsels nach dem zeitgleichen Auswechseln des Bremsrotors (3) und des Bremsbelages (1', 2') ein Festwert als erster Grenzwert genutzt wird.

3. Verfahren nach einem der vorhergehenden Ansprüche 1 oder 2, **dadurch gekennzeichnet, dass** ein den Verschleiß des Bremsrotors (3) repräsentierender Wert bei jedem Belagwechsel ermittelt wird, wobei zur Anzeige eines Bremsrotorwechsels ein zweiter Grenzwert, vorzugsweise als Festwert, mit dem ermittelten den Bremsrotorverschleiß repräsentierenden Wert verglichen wird.

4. Verfahren nach einem der vorhergehenden Ansprüche, **dadurch gekennzeichnet, dass** die Messanordnung einen Verschleißpotentiometer (54) umfasst.

5. Verfahren nach Anspruch 2, **dadurch gekennzeichnet, dass** zur Ermittlung des Festwertes eine Kennlinie des Bremsbelags (1', 2') genutzt wird.

6. Verfahren nach einem der vorhergehenden Ansprüche, **dadurch gekennzeichnet, dass** der Verschleiß des Bremsrotors (3) in Schritt d) durch Abgleich eines bei einer ersten Bremsung nach dem ersten Bremsbelagswechsel ermittelten ersten Startwertes mit einem analog ermittelten zweite Startwert beim vorhergehenden Bremsbelagwechsel oder mit einem Startwert einer Kennlinie der Messanordnung erfolgt.

7. Verfahren nach einem der vorhergehenden Ansprüche, **dadurch gekennzeichnet, dass** der Belagwechsel durch die Messanordnung erfasst wird und dass die Steuer- und/oder Auswerteeinheit nach dem Erfassen des Belagwechsels das Anpassen des ersten Grenzwertes gemäß Schritt d) vornimmt.

8. Verfahren nach einem der vorhergehenden Ansprüche, **dadurch gekennzeichnet, dass** das Verfahren zur Ermittlung des Zeitpunktes eines Belagsauswechslung genutzt wird.

9. Verfahren nach einem der vorhergehenden Ansprüche, **dadurch gekennzeichnet, dass** das Verfahren zur Ermittlung des Zeitpunktes eines Bremsrotorauswechslung genutzt wird.

10. Verfahren nach einem der vorhergehenden Ansprüche, **dadurch gekennzeichnet, dass** das Erfassen in Schritt a) berührungslos erfolgt.

11. Verfahren nach einem der vorhergehenden Ansprüche, **dadurch gekennzeichnet, dass** die Steuer- und/oder Auswerteeinheit bei der Anzeige des Belagswechsels die Standzeit des Fahrzeugs mit der Fahrzeugbremse berücksichtigt.

## Claims

1. Method for indicating an upcoming brake pad change for a vehicle brake comprising at least one brake pad (1, 2, 1', 2') and a brake rotor (3), wherein the vehicle brake has a measuring arrangement for determining wear, comprising a sensor element and a control and/or evaluation unit, wherein the method comprises at least the following steps:
a. determining the current wear of the vehicle brake in braking operation as a sum parameter, which comprises at least a one-sided wear of the brake rotor (3) and the at least one brake pad (1, 2); wherein this wear is the difference between the current degree of wear of the brake pad and the brake rotor and an initial wear of the degree of wear between the brake pad and the brake rotor when the brake pad is fitted;
b. indicating a first brake pad change when a predetermined first limit value of the sum parameter is reached or exceeded or not reached;
c. replacing the used brake pad (1, 2) for a new brake pad (1', 2') without replacing the brake rotor (3); and
d. adjusting the first limit value, taking into account the wear of the brake rotor (3) or establishing a correction factor on the basis of the wear of the brake rotor (3), in order to correct the wear of the new brake pad (1', 2') and the brake rotor (3) determined at the time, wherein the adjustment of the first limit value takes place taking into account the wear of the brake rotor (3) such that in a first braking operation after the brake pad has been replaced, the wear detected by the measuring arrangement is associated with the brake rotor (3), and the limit value is adjusted accordingly to the actual degree of wear of the brake pad (2'), so that in subsequent braking operations the detected sum parameter is adjusted up to the new limit value, and wherein steps a)-d) are repeated until the brake rotor (3) is replaced.

2. Method according to claim 1, **characterized in that** a fixed value is used as the first limit value to indicate a brake lining change after the simultaneous replacement of the brake rotor (3) and the brake pad (1', 2').

3. Method according to any one of the preceding claims 1 or 2, **characterized in that** a value representing the wear of the brake rotor (3) is determined at each pad change, wherein a second limit value, preferably a fixed value, is compared with the determined value representing the brake rotor wear to indicate a brake rotor change.

4. Method according to any one of the preceding claims, **characterized in that** the measuring arrangement comprises a wear potentiometer (54).

5. Method according to claim 2, **characterized in that** a characteristic curve of the brake pad (1', 2') is used to determine the fixed value.

6. Method according to any one of the preceding claims, **characterized in that** the wear of the bake rotor (3) is determined in step d) by comparing a first start value determined during a first braking operation after the first brake pad change with a similarly determined second start value during the previous brake pad change or with a start value of a characteristic of the measuring arrangement.

7. Method according to any one of the preceding claims, **characterized in that** the pad change is detected by the measuring arrangement and the control and/or evaluation unit carries out the adjustment of the first limit value according to step d) after the pad change has been detected.

8. Method according to any one of the preceding claims, **characterized in that** the method is used to determine the time of a brake pad change.

9. Method according to any one of the preceding claims, **characterized in that** the method is used to determine the time of a brake rotor replacement.

10. Method according to any one of the preceding claims, **characterized in that** the detection in step a) is contactless.

11. Method according to any one of the preceding claims, **characterized in that** the control and/or evaluation unit takes into account the standing time of the vehicle with the vehicle brake when indicating the pad change.

## Revendications

1. Procédé pour indiquer un changement de garniture de frein imminent d'un frein de véhicule automobile comprenant au moins une garniture de frein (1, 2, 1', 2') et un rotor de frein (3), dans lequel le frein de véhicule automobile présente un agencement de mesure pour déterminer une usure, comprenant un élément capteur et une unité de commande et/ou d'évaluation, dans lequel le procédé comprend au moins les étapes suivantes :
a. détecter l'usure actuelle en mode freinage du frein de véhicule automobile comme paramètre global qui comprend au moins une usure unilatérale du rotor de frein (3) et de l'au moins une garniture de frein (1, 2) ; dans lequel ladite usure est la différence entre la course d'usure actuelle de la garniture de frein et du rotor de frein et une usure initiale de la course d'usure entre la garniture de frein et le rotor de frein lors du montage de la garniture de frein ;
b. indiquer un premier changement de garniture de frein lorsqu'une première valeur seuil prédéfinie du paramètre global est atteinte ou supérieure ou inférieure ;
c. remplacer la garniture de frein (1, 2) usagée par une nouvelle garniture de frein (1', 2') sans remplacer le rotor de frein (3) ;
d. ajuster la première valeur seuil en fonction de l'usure du rotor de frein (3) ou en établir un facteur de correction sur la base de l'usure du rotor de frein (3), pour corriger une usure déterminée sur le moment de la nouvelle garniture de frein (1', 2') et du rotor de frein (3), dans lequel l'ajustement de la première valeur seuil en fonction de l'usure du rotor de frein (3) s'effectue de telle sorte que, lors d'un premier processus de freinage après le changement de garniture de frein, l'usure détectée par le dispositif de mesure est associée au rotor de frein (3) et la valeur seuil est ajustée en conséquence au degré d'usure réel de la garniture de frein (2'), de sorte que, lors de processus de freinage ultérieurs, le paramètre global détecté est ajusté jusqu'à la nouvelle valeur seuil, et dans lequel les étapes a)-d) sont répétées jusqu'au remplacement du rotor de frein (3).

2. Procédé selon la revendication 1, **caractérisé en ce qu'**une valeur fixe est utilisée comme première valeur seuil pour indiquer un changement de garniture de frein après le remplacement simultané du rotor de frein (3) et de la garniture de frein (1', 2').

3. Procédé selon l'une quelconque des revendications précédentes 1 ou 2, **caractérisé en ce qu'**une valeur représentant l'usure du rotor de frein (3) est déterminée lors de chaque changement de garniture, dans lequel une seconde valeur seuil, de préférence comme valeur fixe, est comparée à la valeur déterminée représentant l'usure du rotor de frein pour indiquer un changement de rotor de frein.

4. Procédé selon l'une quelconque des revendications précédentes, **caractérisé en ce que** l'agencement de mesure comprend un potentiomètre d'usure (54).

5. Procédé selon la revendication 2, **caractérisé en ce qu'**une courbe caractéristique de la garniture de frein (1', 2') est utilisée pour déterminer la valeur fixe.

6. Procédé selon l'une quelconque des revendications précédentes, **caractérisé en ce que** l'usure du rotor de frein (3) à l'étape d) s'effectue en comparant une première valeur de départ déterminée lors d'un premier freinage après le premier changement de garniture de frein à une seconde valeur de départ déterminée de manière analogue lors du changement de garniture de frein précédent ou à une valeur de départ d'une courbe caractéristique de l'agencement de mesure.

7. Procédé selon l'une quelconque des revendications précédentes, **caractérisé en ce que** le changement de garniture est détecté par le dispositif de mesure et **en ce que** l'unité de commande et/ou d'évaluation procède à l'ajustement de la première valeur seuil conformément à l'étape d) après la détection du changement de garniture.

8. Procédé selon l'une quelconque des revendications précédentes, **caractérisé en ce que** le procédé est utilisé pour déterminer le moment d'un remplacement de garniture.

9. Procédé selon l'une quelconque des revendications précédentes, **caractérisé en ce que** le procédé est utilisé pour déterminer le moment d'un remplacement de rotor de frein.

10. Procédé selon l'une quelconque des revendications précédentes, **caractérisé en ce que** la détection à l'étape a) s'effectue sans contact.

11. Procédé selon l'une quelconque des revendications précédentes, **caractérisé en ce que** l'unité de commande et/ou d'évaluation tient compte du temps d'arrêt du véhicule automobile avec le frein de véhicule automobile lors de l'indication du changement de garniture.
